# EUROPÄISCHE PATENTSCHRIFT

(11) **EP 2 577 916 B1**
(45) Veröffentlichungstag und Bekanntmachung des Hinweises auf die Patenterteilung: **26.09.2018**
(21) Anmeldenummer: 11716215.6
(22) Anmeldetag: 15.04.2011
(51) Int. Cl.: H04L 12/40

(54) **VERFAHREN ZUM VERARBEITEN VON NACHRICHTEN**
METHOD FOR PROCESSING MESSAGES
PROCÉDÉ DE TRAITEMENT D'INFORMATIONS

(30) Priorität: 27.05.2010 DE 102010029346
(43) Veröffentlichungstag der Anmeldung: 10.04.2013
(73) Patentinhaber: Robert Bosch GmbH, 70442 Stuttgart (DE)
(72) Erfinder: BLASCHKE, Volker, 71642 Ludwigsburg (DE); SCHIRMER, Juergen, 69124 Heidelberg (DE); LOTHSPEICH, Timo, 70839 Gerlingen (DE); LORENZ, Tobias, 71707 Schwieberdingen (DE); SCHROFF, Clemens, 76703 Kraichtal (DE)
(86) Internationale Anmeldenummer: PCT/EP2011/056035
(87) Internationale Veröffentlichungsnummer: WO 2011/147642

(56) Entgegenhaltungen:
- WO-A1-2005/064546
- DE-A1- 4 408 488
- DE-A1- 10 143 356
- US-B1- 6 381 648
- RADCOM: "Radconmendation: How to Use the Performer Analyzer on MPLS Networks", Internet Article, November 2004 (2004-11), Seiten 1-7, XP002656533, Internet Gefunden im Internet: URL:http://networkquality.ru/files/RADCOMm endation_MPLS.pdf [gefunden am 2011-08-09]

## Beschreibung

Die Erfindung betrifft ein Verfahren und eine Anordnung zum Verarbeiten von Nachrichten.

### Stand der Technik

Zum Übertragen von Datenpaketen in kabelgebundenen Netzwerken, z. B. LAN, wird u. a. die sog. Ethernet-Technologie verwendet. Ethernet ist ein Netzwerk zur Datenverarbeitung, das mehrere Anordnungen zur Datenverarbeitung umfassen kann. Hierbei zum Einsatz kommende Kontrollmodule bzw. Ethernet-Controller sind in der Regel dazu ausgebildet, über Datenpakete verschiedene Informationen zu empfangen und an Software-Treiber von Geräten zur Verarbeitung weiterzuleiten. Ein Software-Treiber ist dazu ausgebildet, eine Nachricht auszuwerten und aus dem Empfangsspeicher des Ethernet-Controllers in einen anderen internen Speicher zu kopieren. Dieser Vorgang ist rechenintensiv und führt zu unnötig hohen Verarbeitungszeiten. Ein Ethernet-Controller mit der Möglichkeit einer Filterung von Nachrichten ist der US 6,381,648 B1 zu entnehmen.

Im Gegensatz dazu kommen in einem Kraftfahrzeug Kommunikationscontroller für üblicherweise verwendete Feldbussysteme, wie bspw. CAN oder FlexRay, zur Anwendung, die über einen Nachrichtenspeicher verfügen. Jeder Speicherplatz in diesem Nachrichtenspeicher dient der Verarbeitung einer speziellen Nachricht, die u. a. einen Betriebsparameter des Kraftfahrzeugs, wie bspw. die Motordrehzahl oder die Fahrzeuggeschwindigkeit, umfassen kann. Hierbei findet eine Voranalyse der Nachricht und bereits in der Hardware eine automatische Speicherung statt. Die Software kann jederzeit bei Bedarf auf das zuletzt empfange Datum zugreifen. Dabei werden ältere Nachrichten von aktuellen Nachrichten überschrieben.

Die Druckschrift WO 2005/064546 A1 beschreibt ein Verfahren zum Mitlesen von Nachrichten, die über einen Datenbus in einem Kraftfahrzeug zwischen Elektronikeinheiten versendet werden. Hierbei wird ein zyklisch überschreibbares, flüchtiges Speichermittel zum Mitspeichern von Nachrichten, die in einem Kommunikationsnetzwerk versendet werden, verwendet.

Ein Verfahren zur zyklischen Übertragung von Daten zwischen mindestens zwei verteilt arbeitenden Steuergeräten ist aus der Druckschrift DE 44 08 488 A1 bekannt. Hierbei ist vorgesehen, dass Daten in einem Schieberegister gespeichert werden.

### Offenbarung der Erfindung

Vor diesem Hintergrund werden ein Verfahren und eine Anordnung mit den Merkmalen der unabhängigen Patentansprüche vorgestellt. Weitere Ausgestaltungen der Erfindung ergeben sich aus den abhängigen Patentansprüchen und der Beschreibung.

Der im Rahmen der Erfindung vorgesehene Ethernet-Controller, d. h. ein Kontrollgerät bzw. ein Kontrollmodul für ein Netzwerk, bei dem Datenpakete mit Ethernet-Technologie übertragen werden, umfasst einen Nachrichtenspeicher. Dieser Ethernet-Controller eignet sich daher typischerweise für Anwendungen in abgeschlossenen Netzwerken mit fester Nachrichtenkonfiguration.

Der Ethernet-Controller, der auch als Ethernet-Kontrollgerät bezeichnet werden kann, empfängt eine Nachricht als Datenpaket und prüft diese auf bestimmte Eigenschaften, die vorab im Nachrichtenspeicher definiert wurden. Treffen die bestimmten bzw. relevanten Eigenschaften auf die empfangene Nachricht zu, wird diese an einer entsprechenden Stelle im Nachrichtenspeicher abgelegt. Dabei kann für eine Nachricht, die einen bestimmten Inhalt aufweist, eine bestimmte Stelle bzw. ein Speicherplatz nur für diese Nachricht vorgesehen sein, der für diese Nachricht reserviert ist und in dem diese Nachricht gespeichert wird. Eine Zuordnung der Nachricht zu dem Speicherplatz ist u. a. davon abhängig, welchen mindestens einen Betriebsparameter die Nachricht enthält. Entsprechend werden in den für den mindestens einen bestimmten Betriebsparameter reservierten Speicherplätzen nur Nachrichten mit diesem mindestens einen Betriebsparameter gespeichert.

Eine üblicherweise zum Einsatz kommende Software kann jederzeit dediziert auf die zuletzt empfange Nachricht zugreifen. Aktuellere Nachrichten überschreiben dabei automatisch ältere. Als Betriebsparameter kann bspw. die Fahrzeuggeschwindigkeit berücksichtigt werden.

In Ausgestaltung der Erfindung kann vorgesehen sein, dass eine Nachricht zumindest einen Betriebsparameter aufweist, durch den die zumindest eine Eigenschaft dieser Nachricht festgelegt wird. In der Regel weist ein Betriebsparameter des Kraftfahrzeugs einen bestimmten Wert auf. Werte eines Betriebsparameters ändern sich üblicherweise während des Betriebs des Kraftfahrzeugs.

In einer weiteren Ausgestaltung der Erfindung weist eine erste Nachricht, deren zumindest eine Eigenschaft über zumindest einen Betriebsparameter definiert ist, einen ersten Wert dieses zumindest einen Betriebsparameters auf. Eine zweite Nachricht, deren zumindest eine Eigenschaft über denselben zumindest einen Betriebsparameter wie im Fall der ersten Nachricht definiert ist, weist einen zweiten Wert dieses zumindest einen Betriebsparameters auf. Bei einem Aktualisierungsvorgang ist vorgesehen, dass die ältere, erste Nachricht durch die neuere, zweite Nachricht ersetzt wird. Damit erfolgt eine Änderung des Werts des zumindest einen Betriebsparameters innerhalb des Nachrichtenspeichers.

Ist vorgesehen, dass von einem Steuergerät seitens der Software eine Nachricht versendet wird, wird die Nachricht an die passende Stelle im Nachrichtenspeicher adressiert und die Sendung ausgelöst.

Dieses Auslösen erfolgt üblicherweise durch einen entsprechenden Schreibvorgang im Senderegister eines Kommunikationscontrollers. In Ausgestaltung kann auch sofort nach jeder Modifikation und somit bspw. nach einer Aktualisierung einer Nachricht ein Senden dieser Nachricht automatisch ausgelöst werden. Diese Funktionalität kommt indirekt einer Spiegelung einer Nachricht auf zwei oder mehreren miteinander kommunizierenden Kommunikationscontrollern gleich.

Ändert ein Prozessor die Nachricht, d. h. den Inhalt der Nachricht, so dass aus der ersten Nachricht die zweite Nachricht hervorgeht, kann diese automatisch übertragen und alle anderen Speicherplätze in dem Nachrichtenspeicher entsprechend aktualisiert werden. Um Konsistenz im Nachrichtenspeicher zu wahren, weisen die Kommunikationscontroller üblicherweise einen Eingabe-bzw. Input- und eine Ausgabe-bzw. Output-Pufferspeicher auf, mit dem Nachrichten angefordert werden können und von dem Kommunikationscontroller bereitgestellt werden. Es ist aber auch denkbar, den Nachrichtenspeicher des Ethernet-Controllers direkt in einen Adressraum des Prozessors zu legen, um so einen direkten Zugriff zu ermöglichen. Somit kann eine Speichereinblendung (Memory Mapping) durchgeführt werden.

Mit dem Verfahren kann eine erhebliche Entlastung der Software erreicht werden, weil der Ethernet-Controller die Nachrichten von sich aus auswertet und entsprechend ablegt. Bei Verfahren gemäß dem Stand der Technik muss die Software diese Nachrichten erst im Protokoll-Stapel auswerten und somit mehrere Schichten im OSI-Modell auswerten und die Nachricht schlussendlich an die entsprechende Stelle kopieren. Eine Verweil- bzw. Latenzzeit von Nachrichten kann somit bei einer Ausführungsform des erfindungsgemäßen Verfahrens reduziert werden. Weiterhin wird eine zentrale Recheneinheit (CPU) des Ethernet-Controllers entlastet und kann für andere Aufgaben genutzt werden.

Die erfindungsgemäße Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen wenigstens einer Komponente der Anordnung oder der gesamten Anordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt in schematischer Darstellung einen aus dem Stand der Technik bekannten Ethernet-Controller.
Figur 2 zeigt in schematischer Darstellung ein Blockschaltbild eines sogenannten TCP/IP-Stacks.
Figur 3 zeigt in schematischer Darstellung ein Beispiel für einen aus dem Stand der Technik bekannten Kommunikationscontroller, der üblicherweise in einem Kraftfahrzeug zum Einsatz kommt.
Figur 4 zeigt in schematischer Darstellung einen Nachrichtenspeicher, wie er in einer Ausführungsform eines erfindungsgemäßen Ethernet-Controllers zum Einsatz kommen kann.
Figur 5 zeigt in schematischer Darstellung ein Beispiel für einen Ethernet-Frame bzw.- Rahmen.
Figur 6 zeigt in schematischer Darstellung einen Aufbau eines IPV4-Frames und somit eines Rahmens für ein Datenpaket, wie er bspw. bei dem Internetprotokoll der Version 4 zum Einsatz kommt.
Figur 7 zeigt in schematischer Darstellung einen IPV6-Frame bzw.- Rahmen, der bspw. bei einem Internetprotokoll der Version 6 eingesetzt wird.
Figur 8 zeigt in schematischer Darstellung ein Beispiel für einen TCP-Rahmen bzw. TCP-Frame.
Figur 9 zeigt in schematischer Darstellung ein Beispiel für einen UDP-Rahmen bzw. einen UDP-Frame.
Figur 10 zeigt in schematischer Darstellung eine Ausführungsform einer erfindungsgemäßen Anordnung.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

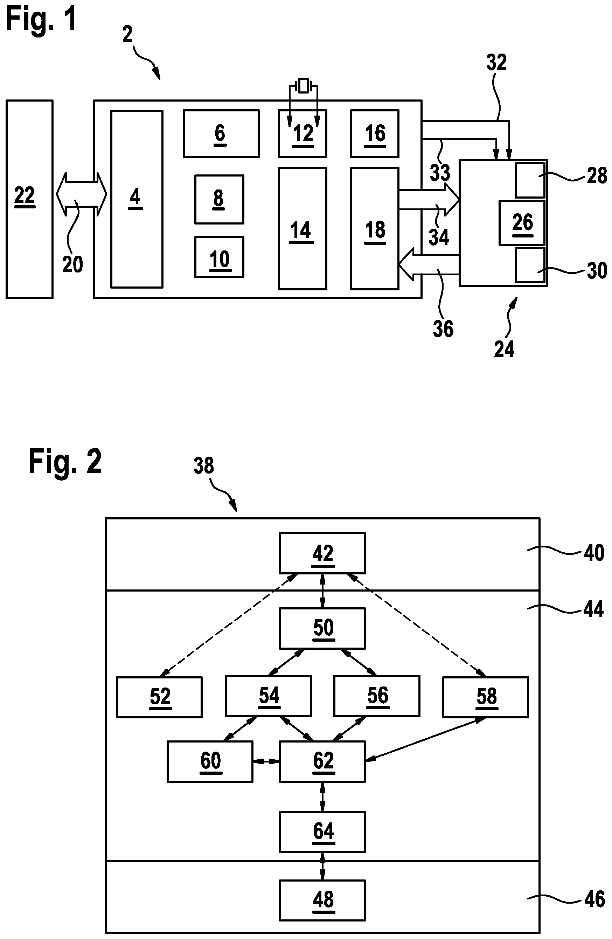

Der in Figur 1 schematisch dargestellte konventionelle Ethernet-Controller 2 umfasst ein Host-Interface 4 und somit eine Schnittstelle zu einem Datenbankanbieter, einen 8 kB User Flash 6 bzw. einen digitalen Speicherchip einen 2 kB Tx Buffer 8 bzw. einen Pufferspeicher, zum Senden von Nachrichten, einen 4 kB Rx-FIFO (First In First Out) Puffer 10 zum Empfangen von Nachrichten, eine Uhr 12, die hier mit einer Frequenz von 20 MHz betrieben wird, einen Ethernet MAC (Media Access Control) 14 zur Kontrolle eines Zugangs zur einer medialen Adresse, eine Kontrollanzeige 16 (LED Control) und eine physikalische Schicht 18 (Ethernet PHY).

Die Schnittstelle 4 des Ethernet-Controllers 2 ist über eine parallele Busanbindung 20 mit einem Mircocontroller 22 (MCU) des Datenanbieters (Host) verbunden. Weiterhin zeigt Figur 1 ein Modul 24, mit einem Chip 26 (RJ-45) sowie eine als ACT LED ausgebildete Leuchtdiode 28 und eine als LINK LED ausgebildete Leuchtdiode 30, die über Zuleitungen 32, 33 für die LINK LED und für die ACT LED mit einer Kontrollanzeige 16 verbunden sind. Weiterhin ist vorgesehen, dass die physikalische Schicht 18 dem Modul 24 über einen Sendepfad 34 Nachrichten sendet und von dem Modul 24 über einen Empfangspfad 36 Nachrichten empfängt.

Figur 2 zeigt in schematischer Darstellung ein Blockschaltbild einen TCP/IP-Stacks und somit einen Stapelspeichers 38 für ein Transmission Control Protokoll/Internet Protocol. Dieser Stapelspeicher 38 umfasst einen Nutzerbereich 40 mit einer Anwendung 42, einen Kern 44 sowie eine Hardware 46, die einen Netzwerkadapter 48 umfasst.

Der Kern 44 weist ein TCP/UDP-Netzwerkprotokoll 50 (UDP, User Datagramm Protocol), ein Modul 52 zur Kontrolle von Internetbotschaften nach dem Internetprotokoll der Version 4 (ICMPv4 IGMP), ein Modul 54, das das Internetprotokoll der Version 4 umfasst, ein Modul 56, das das Internetprotokoll der Version 6 umfasst, sowie ein Modul 58 zur Kontrolle von Internetnachrichten nach dem Internetprotokoll der Version 6 (ICMPv6) auf. Weiterhin umfasst der Kern 54 ein Modul 60 für ein weiteres Netzwerkprotokoll (ARP, Address Resolution Protocol), ein Modul 62 mit einer Übermittlungsschicht (Link Layer) und ein Modul 64 für einen Gerätetreiber (Device Driver).

Nach dem Empfang einer Nachricht wird diese durch die Host MCU 22 (Figur 1) verarbeitet. Hierzu durchläuft die Nachricht einen Ethernet-Treiber und den Stapelspeicher 38 (TCP/IP-Stack) (Figur 2). Erst danach kann die Anwendung 42 (Applikation) die Daten verarbeiten.

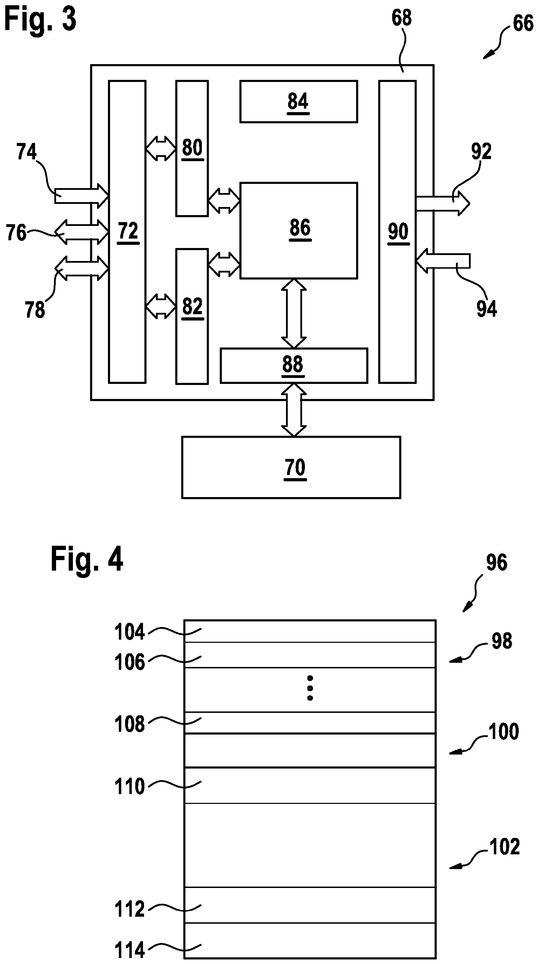

Figur 3 zeigt in schematischer Darstellung einen Kommunikationscontroller 66, der als Stand der Technik bspw. in einem Netzwerk (CAN, Controller Area Network) eines Kraftfahrzeugs zum Einsatz kommt. Dieser Kommunikationscontroller 66 umfasst einen Treiber 68 (Bus-CLK) sowie einen Nachreichenspeicher 70, der hier als RAM ausgebildet ist und einen Puffer für 32 Nachrichten sowie einen Speicherplatz von 136 x 32 Bit umfasst.

Der Treiber 68 umfasst eine Schnittstelle 72, die zum Empfang von Adressen 74 sowie zum Austauschen von Daten 76 und Kontrollbefehlen 78 mit anderen Geräten ausgebildet ist. Weiterhin umfasst der Treiber 68 ein erstes Entscheidungsmodul 80 (IF CON REG 1) sowie ein zweites Entscheidungsmodul 80 (IF CON REG 2). Außerdem weist der Treiber 68 ein Register 84, ein Modul 86 zur Verarbeitung von Botschaften sowie eine Kontrolleinheit 88 zur Kontrolle des Nachrichtenspeichers 70 auf. Ein Kern 90 (CAN-CORE) ist dazu ausgebildet, über einen Sendepfad 92 (CAN-TX) Nachrichten an einen CAN-Bus zu versenden und über einen Empfangspfad 94 (CAN-RX) Nachrichten von dem CAN-Bus zu empfangen.

Der hier gezeigte, in einem Kraftfahrzeug einsetzbare Kommunikationscontroller 66 mit dem Nachrichtenspeicher 70 umfasst Informationen, die zum Empfang und Senden einer Nachricht benötigt werden, und mit dem Nachrichtenspeicher 70 einen Bereich in dem die zugehörigen Nutzdaten der Nachrichten abgelegt werden. Bei CAN-Controllern schließen diese Informationen beispielsweise die Senderichtung, Nachrichtenidentifikation und Nachrichtenmaske ein. Bei FlexRay werden darüber hinaus Informationen zur zeitlichen Position im Kommunikationszeitplan gespeichert.

Da bei einer Übertragung von Datenpaketen nach der Ethernet-Technologie die Übertragung über die zweite OSI-Schicht (Ethernet) hinausgeht und auch die dritte Schicht (IPv4/IPv6) und die vierte Schicht (TCP/UDP) Anwendung finden können, sind je nach Ausbaustufe evtl. deutlich mehr Informationen erforderlich.

Figur 4 zeigt in schematischer Darstellung eine Ausführungsform eines Nachrichtenspeichers 96, der als Komponente eines Ethernet-Controllers, wie er bei einer möglichen Ausführungsform der Erfindung zum Einsatz kommt, eingesetzt werden kann. Der Nachrichtenspeicher 96 umfasst einen ersten Bereich 98 für Kopfdaten (Header) eines Datenpakets, einen zweiten, ungenutzten Bereich 100 und einen dritten Bereich 102 für Nutzdaten des Datenpakets. Dabei umfasst der erste Bereich 98 einen ersten Speicherplatz 104 für Kopfdaten einer ersten Nachricht, einen zweiten Speicherplatz 106 für Kopfdaten einer zweiten Nachricht und eine n-ten Speicherplatz 108 für Kopfdaten einer n-ten Nachricht. Der dritte Bereich umfasst einen ersten Speicherplatz 110 für Nutzdaten der ersten Nachricht, einen zweiten Speicherplatz 112 für Nutzdaten des Datenpakets und einen n-ten Speicherplatz 114 für Nutzdaten der n-ten Nachricht. Es ist dabei unerheblich, ob die Informationen zur Verarbeitung der Nachrichten und die Nutzdaten der Nachricht in getrennten Bereichen 98, 102 des Nachrichtenspeichers 96 liegen, wie hier gezeigt oder jeweils gemeinsam in einem Block abgelegt werden. Eine Trennung des Nachrichtenspeichers 98 wird üblicherweise vorgenommen, wenn sich die Größe der Kopfdaten von der Größe der Nutzdaten der Nachrichten deutlich unterscheidet. Bei Ethernet ist dies üblicherweise der Fall. Bei CAN hingegen folgen die Nutzdaten immer direkt im Anschluss an die zugehörigen Kopfdaten, die u. a. Verarbeitungsinformationen umfassen.

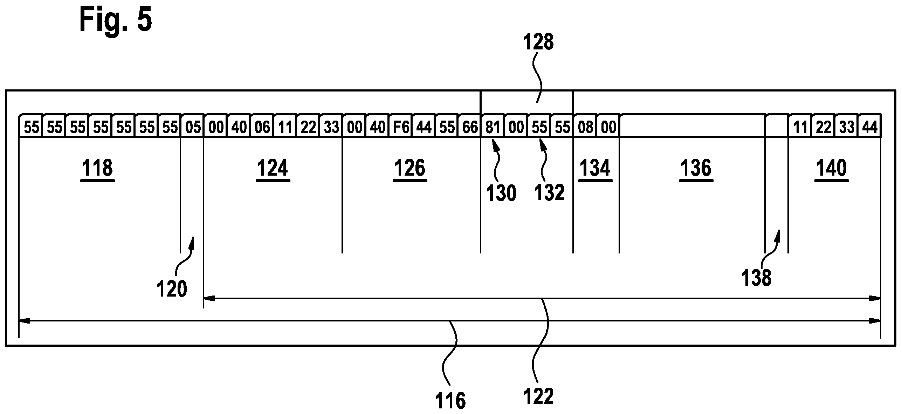

Figur 5 zeigt in schematischer Darstellung ein Beispiel für ein Ethernet-Paket 116, das eine Präambel mit einer Länge von 7 Byte und einen Rahmenbegrenzer 120 (Stack Frame Delimiter, SFD) mit einer Länge von 1 Byte umfasst. Ein Ethernet-Rahmen 122 (Ethernet-Frame) umfasst eine Ziel-MAC-Adresse 124 und eine Quell-MAC-Adresse 126, die jeweils eine Länge von 6 Byte aufweisen. Ein VLAN-Etikett 128, bzw. VLAN-Tag, wobei VLAN für Virtual Local Area Network und somit für ein virtuelles örtlich begrenztes Netzwerk steht, umfasst eine Länge von 7 Byte mit einem TPID 130 und einem TCI 132. Der Ethernet Rahmen 122 umfasst weiterhin ein Typenfeld 134 sowie Daten 136 von einer Länge zwischen 0 und 1500 Byte. Außerdem umfasst der Ethernet-Rahmen 122 ein PAD-Füllfeld 138 und eine CRC-Prüfsumme 140.

Bei Übertagung von Daten mit der Ethernet-Technologie sind im einfachsten Fall nur Information zur zweiten Schicht OS/-Layer 2 (Ethernet) erforderlich. Aus dem Ethernet-Rahmen 122 in Figur 5 können die besagten Nachrichteninformationen zum Senden und Empfangen im Nachrichtenspeicher abgeleitet werden.

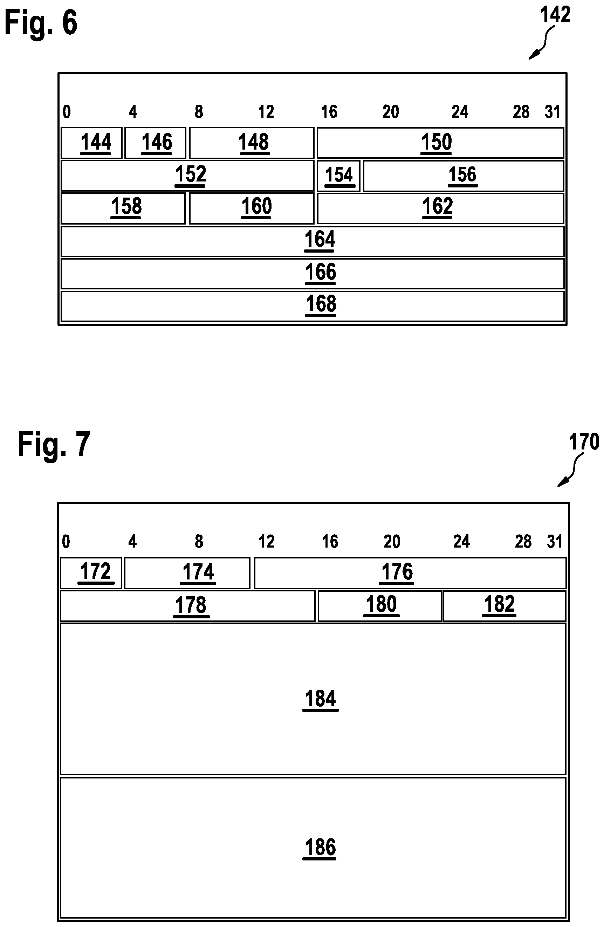

Figur 6 zeigt in schematischer Darstellung ein Beispiel für einen als IPv4-Kopfdatenbereich ausgebildeten Kopfdatenbereich 142 und somit für einen Header, wie er bei einem Internetprotokoll der Version 4 (IPv4) als Einleitung eines zu versendenden Datenpakets (Frame) für eine Nachricht verwendet wird.

Dieser Kopfdatenbereich 142 mit einer Breite von 32 Bit umfasst eine Angabe über eine Version 144 des Kopfdatenbereichs 142 mit einer Breite von 4 Bit, eine Information zu einer Länge 146 des Datenpakets mit einer Breite von 4 Bit, wobei diese Länge 146 auch als IHL für IP Header Length abgekürzt wird, eine Information über einen Servicetyp 148 (TOS, Type of Service) mit einer Breite von 8 Bit sowie eine Information über eine Gesamtlänge 150 des Datenpakets mit einer Breite von 16 Bit.

Weiterhin umfasst der Kopfdatenbereich 142 eine Identifikation 152 mit einer Breite von 16 Bit, einen Kontrollschalter 154 (Flag) mit einer Breite von 3 Bit und eine Information über eine Fragmentierung 156 (Fragment Offset) mit einer Breite von 13 Bit. Außerdem ist hier eine Information über eine Lebensdauer 158 (Time to Live, TTL) des Datenpakets mit einer Breite von 8 Bit, eine Information über das im Rahmen der Ausgestaltung der Erfindung verwendete Internetprotokoll 160 mit einer Breite von 8 Bit und eine Prüfsumme 162 mit einer Breite von 16 Bit vorgesehen. Der hier dargestellte Kopfdatenbereich 21 nach dem Internetprotokoll 160 der Version 4 umfasst auch eine Information über eine Quelladresse 164, eine Zieladresse 166 und ggf. mindestens eine Information zu weiteren Optionen 168, die jeweils eine Breite von 32 Bit aufweisen.

Ein Kopfdatenbereich 170 für ein Datenpaket (Frame) für eine Nachricht eines Internetprotokolls der Version 6 (IPv6) ist in Figur 7 schematisch dargestellt. Dieser als IPv6-Kopfdatenbereich ausgebildete Kopfdatenbereich 170 bzw. Header umfasst eine Information über eine Version 172 mit einer Breite von 4 Bit, eine Information über eine Prioritätsvergabe 174 (Traffic Class) mit einer Breite von 8 Bit, eine Information zu einem Fließwert 176 (Flow Label) mit einer Breite von 20 Bit, eine Information über eine Länge 178 eines Inhalts des als IPv6-Datenpaket ausgebildeten Datenpakets mit einer Breite von 16 Bit, eine Information zur Identifizierung 180 eines nachfolgenden Kopfdatenbereichs mit einer Breite von 8 Bit und eine Information über eine maximale Anzahl an Zwischenschritten 182 (Hop Limit), die das zugeordnete Datenpaket über einen Router zurücklegen darf, mit einer Breite von 8 Bit. Außerdem umfasst der gezeigte Kopfdatenbereich 170 eine Quelladresse 184 und eine Zieladresse 186, die jeweils eine Breite von 128 Bit aufweisen.

Für das IP-Protokoll auf einer dritten Schicht OS/-Layer werden die in den Figuren 6 und 7 gezeigten Versionen für Kopfdatenbereiche 142, 170 verwendet. Hieraus können die gezeigten Informationen zum Senden und Empfangen von Nachrichten abgeleitet werden.

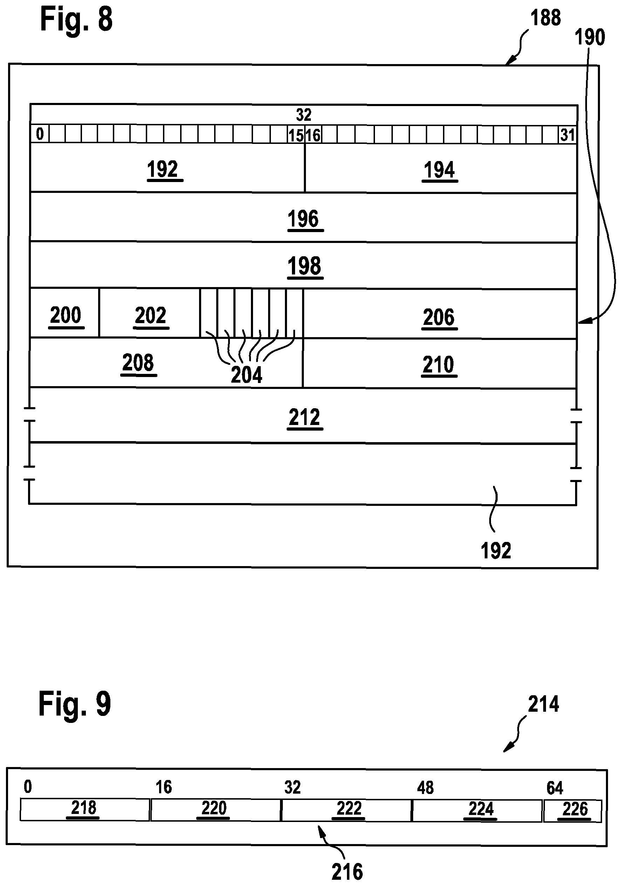

Figur 8 zeigt in schematischer Darstellung einen Rahmen 188 bzw. Frame, wie er bei einem TCP-Protokoll verwendet wird. Der Rahmen 188 umfasst einen TCP-Kopfdatenbereich 190 (TCP-Header) und einen Bereich 192 für zu übermittelnde Daten.

Der Kopfdatenbereich 190 umfasst Informationen zu einem Quellanschluss 192, Informationen zu einem Zielanschluss 194, Informationen zur eine Sequenznummer 196 sowie Informationen zur einer Empfangsbestätigung 198. Weiterhin umfasst der Kopfdatenbereich 190 einen Datenabstand 200 (Data offset), einen reservierten Bereich 202, mehrere Kontrollvariabeln 204, ein Fenster 206, eine Prüfsumme 208, einen Dringlichkeitszeiger 210, und Informationen zur weiteren Optionen 212 mit einer Anzahl von 32-Bit-Wörtern.

Der in Figur 9 schematisch dargestellte UDP-Rahmen (UDP-Frame), wie er für ein UDP und somit ein User Datagramm Protocol verwendet wir, umfasst ein UDP-Datenpaket 216 sowie Informationen zu einem Quellanschluss 218, Informationen zu einem Zielanschluss 220, Information zur einer Länge 222, Informationen zu einer Prüfsumme 224 sowie Daten 226.

Der TCP-Rahmen 188 (Figur 8) und der UDP-Rahmen 214 (Figur 9) enthalten somit die jeweils gezeigte Informationen, beispielsweise zu dem Quellanschluss 192, 218 dem Zielanschluss 180, 225 oder der Länge 222. Zu beachten ist hier, dass bei der Verarbeitung von TCP-Informationen der aktuelle Protokollzustand, z. B. des Nachrichtenzählers, zu berücksichtigen ist. Das UDP-Protokoll ist zustandslos und lässt sich auch aufgrund der geringen Komplexität bei einer Ausführungsform des erfindungsgemäßen Verfahrens verarbeiten.

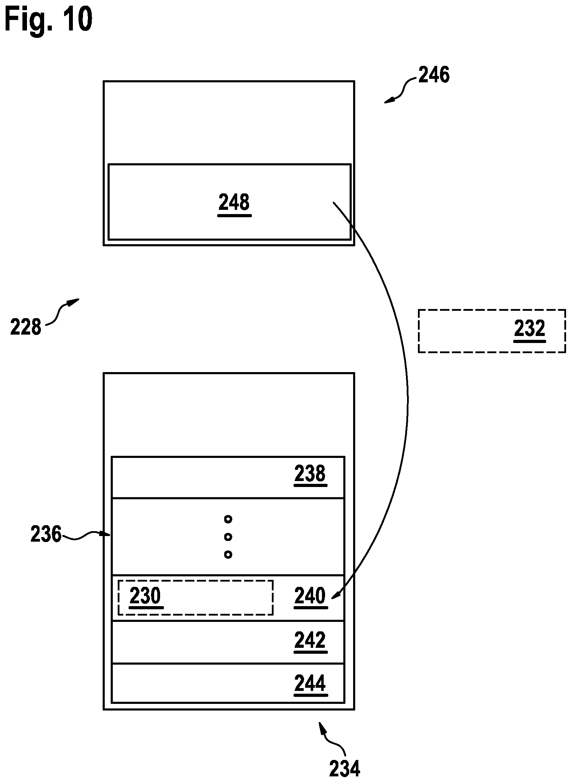

Die in Figur 10 schematisch dargestellte Ausführungsform einer erfindungsgemäßen Anordnung 228 zum Verarbeiten von Nachrichten 230, 232 weist einen Ethernet-Controller 234 und somit ein Kontrollgerät für Nachrichten, die als Datenpakete mit der Ethernet-Technologie übertragen werden, mit einem Nachrichtenspeicher 236 auf, der eine Anzahl von Speicherplätzen 238 umfasst. Der Ethernet-Controller 236 überprüft eine empfangene Nachricht 230, 232 auf das Vorliegen von zumindest einer Eigenschaft und speichert die empfangene Nachricht 230, 232 in einem für die Nachrichten 230, 232 reservierten Speicherplatz 238, 240, 242, 244 des Nachrichtenspeichers 236, wenn diese zumindest eine Eigenschaft für die Nachricht 230, 232 zutrifft.

Die Anordnung 228 umfasst weiterhin einen Kommunikationscontroller 246 mit einem Senderegister 248, wobei der Kommunikationscontroller 246 dazu ausgebildet ist, eine Nachricht 230, 232 nach Durchführung eines Schreibvorgangs innerhalb des Senderegisters 248 zu versenden.

Die hier beschriebene Ausführungsform der erfindungsgemäßen Anordnung 228 ist in einem Netzwerk innerhalb eines Kraftfahrzeugs angeordnet und dazu ausgebildet, Nachrichten 230, 232, die als zumindest eine Eigenschaft einen Wert für zumindest ein Betriebsparameter des Kraftfahrzeugs aufweisen, zu übermitteln. Demnach wird zumindest eine Eigenschaft der Nachricht 230, 232 über den zumindest einen Betriebsparameter definiert.

In der anhand von Figur 10 gezeigten Betriebssituation ist vorgesehen, dass sich eine erste Nachricht 230 bereits in einem Speicherfeld 240 des Nachrichtenspeichers 236 befindet. Diese erste Nachricht 230 umfasst einen ersten Wert des zumindest einen Betriebsparameters. Weithin wird bei laufendem Betrieb des Kraftfahrzeugs der Wert des zumindest einem Betriebsparameters verändert. Durch die sich ergebende Änderung des Werts wird jedoch der zumindest eine Betriebsparameter und somit auch die zumindest eine Eigenschaft der Nachricht 230, 232 nicht verändert. Die von dem Kommunikationscontroller 246 übermittelte zweite Nachricht 232 umfasst einen zweiten, aktualisierten Wert des zumindest ein Betriebsparameters. Sobald die zweite Nachricht 232 den Ethernet-Controller 234 erreicht hat, wird die zweite Nachricht 232 in dem Speicherplatz 240, in dem sich bereits die erste Nachricht 230 befindet, gespeichert, wodurch außerdem die erste Nachricht 230 durch die zweite Nachricht 232 überschrieben wird. Dadurch erfolgt eine Aktualisierung des Werts des zumindest ein Betriebsparameters innerhalb des Nachrichtenspeichers 236.

## Patentansprüche

1. Verfahren zum Verarbeiten von Nachrichten (230, 232) in einem Kraftfahrzeug mit mindestens einem Ethernet-Controller (234), der einen Nachrichtenspeicher (96, 236) aufweist, bei dem eine empfangene Nachricht (230, 232) von dem mindestens einen Ethernet-Controller (234) auf das Vorliegen von zumindest einer Eigenschaft überprüft wird, und bei dem die empfangene Nachricht (230, 232) in dem Nachrichtenspeicher (96, 236) gespeichert wird, wenn diese zumindest eine Eigenschaft für die Nachricht (230, 232) zutrifft, **dadurch gekennzeichnet, dass** die empfangene Nachricht (230, 232) einen Wert von zumindest einem Betriebsparameter des Kraftfahrzeugs umfasst und die Eigenschaft durch den zumindest einen Betriebsparameter des Kraftfahrzeugs definiert ist und dass die Nachricht (230, 232) entsprechend der zutreffenden Eigenschaft in einem für diese Nachricht reservierten Speicherplatz des Nachrichtenspeichers (96, 236) gespeichert wird, wobei eine erste Nachricht (230, 232), deren zumindest eine Eigenschaft über zumindest einen Betriebsparameter definiert ist, einen ersten Wert dieses zumindest einen Betriebsparameters und eine zweite Nachricht (230, 232), deren zumindest eine Eigenschaft über denselben zumindest einen Betriebsparameter wie im Fall der ersten Nachricht (230, 232) definiert ist, einen zweiten Wert dieses zumindest einen Betriebsparameters aufweist, wobei bei einem Aktualisierungsvorgang vorgesehen wird, dass die ältere, erste Nachricht (230, 232) durch die neuere, zweite Nachricht (230, 232) ersetzt wird, wobei eine Änderung des Werts des zumindest einen Betriebsparameters innerhalb des Nachrichtenspeichers (96, 236) erfolgt.

2. Verfahren nach Anspruch 1, bei dem ein Inhalt des Nachrichtenspeichers (96, 236) des mindestens einen Ethernet-Controllers (234) aktualisiert wird, wenn eine Nachricht (230, 232) geändert wird.

3. Verfahren nach einem der voranstehenden Ansprüche, bei dem eine erste Nachricht (230, 232), die die zumindest eine Eigenschaft aufweist in einem Speicherplatz (104, 106, 108, 110, 112, 114, 238, 240, 242, 244) des Nachrichtenspeichers (96, 236) gespeichert wird, und bei dem die erste Nachricht (230, 232) bei Empfang einer zweiten Nachricht (230, 232), die dieselbe zumindest eine Eigenschaft, wie die erste Nachricht (230, 232) aufweist, von der zweiten Nachricht (230, 232) überschrieben wird.

4. Verfahren nach einem der voranstehenden Ansprüche, bei dem Nachrichten (230, 232) von mindestens einem Kommunikationscontroller (246) versendet werden.

5. Verfahren nach einem der voranstehenden Ansprüche, bei dem die Nachrichten (230, 232) innerhalb eines Netzwerks über ein Internetprotokoll versendet werden.

6. Anordnung zum Verarbeiten von Nachrichten in einem Kraftfahrzeug, die einen Ethernet-Controller (234) mit einem Nachrichtenspeicher (96, 236) aufweist, wobei der mindestens einen Ethernet-Controller (234) eingerichtet ist, eine empfangene Nachricht (230, 232) auf das Vorliegen von zumindest einer Eigenschaft zu überprüfen und die empfangene Nachricht (230, 232) in dem Nachrichtenspeicher (96, 236) zu speichern, wenn diese zumindest eine Eigenschaft für die Nachricht (230, 232) zutrifft, **dadurch gekennzeichnet, dass** die empfangene Nachricht (230, 232) einen Wert von zumindest einem Betriebsparameter des Kraftfahrzeugs umfasst und die Eigenschaft durch den zumindest einen Betriebsparameter des Kraftfahrzeugs definiert ist und dass der Ethernet-Controller (234) dazu eingerichtet ist, die Nachricht (230, 232) entsprechend der zutreffenden Eigenschaft in einem für diese Nachricht (230, 232) reservierten Speicherplatz des Nachrichtenspeichers (96, 236) zu speichern, wobei eine erste Nachricht (230, 232), deren zumindest eine Eigenschaft über zumindest einen Betriebsparameter definiert ist, einen ersten Wert dieses zumindest einen Betriebsparameters und eine zweite Nachricht (230, 232), deren zumindest eine Eigenschaft über denselben zumindest einen Betriebsparameter wie im Fall der ersten Nachricht (230, 232) definiert ist, einen zweiten Wert dieses zumindest einen Betriebsparameters aufweist, wobei bei einem Aktualisierungsvorgang vorgesehen ist, dass die ältere, erste Nachricht (230, 232) durch die neuere, zweite Nachricht (230, 232) zu ersetzen ist, wobei eine Änderung des Werts des zumindest einen Betriebsparameters innerhalb des Nachrichtenspeichers (96, 236) erfolgt.

7. Anordnung nach Anspruch 6, bei der der Nachrichtenspeicher (96, 236) eine Anzahl Speicherplätze (104, 106, 108, 110, 112, 114, 238, 240, 242, 244) aufweist, wobei jeweils ein Speicherplatz (104, 106, 108, 110, 112, 114, 238, 240, 242, 244) für eine Nachricht (230, 232), die die zumindest eine Eigenschaft erfüllt, reserviert ist.

8. Anordnung nach Anspruch 6 oder 7, die einen Kommunikationscontroller (246) mit einem Senderegister (248) aufweist, wobei der Kommunikationscontroller (246) dazu ausgebildet ist, eine Nachricht (230, 232) nach Durchführung eines Schreibvorgangs durch das Senderegister (248) zu versenden.

9. Anordnung nach einem der Ansprüche 6 bis 8, die in einem Kraftfahrzeug angeordnet und dazu ausgebildet ist, Nachrichten (230, 232) von einem Netzwerk, das in dem Kraftfahrzeug angeordnet ist, auszutauschen.

## Claims

1. Method for processing messages (230, 232) in a motor vehicle having at least one Ethernet controller (234), which has a message memory (96, 236), in which a received message (230, 232) is checked by the at least one Ethernet controller (234) for the presence of at least one property, and in which the received message (230, 232) is stored in the message memory (96, 236) if this at least one property applies to the message (230, 232), **characterized in that** the received message (230, 232) comprises a value of at least one operating parameter of the motor vehicle and the property is defined by the at least one operating parameter of the motor vehicle and **in that** the message (230, 232) is stored according to the applicable property in a memory location of the message memory (96, 236) that is reserved for this message, wherein a first message (230, 232) whose at least one property is defined by means of at least one operating parameter has a first value of this at least one operating parameter and a second message (230, 232) whose at least one property is defined by means of the same at least one operating parameter as in the case of the first message (230, 232) has a second value of this at least one operating parameter, wherein an update process results in there being provision made for the older, first message (230, 232) to be replaced by the newer, second message (230, 232), with the value of the at least one operating parameter being changed within the message memory (96, 236).

2. Method according to Claim 1, in which a content of the message memory (96, 236) of the at least one Ethernet controller (234) is updated when a message (230, 232) is changed.

3. Method according to either of the preceding claims, in which a first message (230, 232) that has the at least one property is stored in a memory location (104, 106, 108, 110, 112, 114, 238, 240, 242, 244) of the message memory (96, 236), and in which, on reception of a second message (230, 232) that has the same at least one property as the first message (230, 232), the first message (230, 232) is overwritten by the second message (2320, 232).

4. Method according to one of the preceding claims, in which the messages (230, 232) are sent by at least one communication controller (246).

5. Method according to one of the preceding claims, in which the messages (230, 232) are sent within a network by means of an Internet protocol.

6. Arrangement for processing messages in a motor vehicle that has an Ethernet controller (234) having a message memory (96, 236), wherein the at least one Ethernet controller (234) is set up to check a received message (230, 232) for the presence of at least one property and to store the received message (230, 232) in the message memory (96, 236) if this at least one property applies to the message (230, 232), **characterized in that** the received message (230, 232) comprises a value of at least one operating parameter of the motor vehicle and the property is defined by the at least one operating parameter of the motor vehicle and **in that** the Ethernet controller (234) is set up to store the message (230, 232) according to the applicable property in a memory location of the message memory (96, 236) that is reserved for this message (230, 232), wherein a first message (230, 232) whose at least one property is defined by means of at least operating parameter has a first value of this at least one operating parameter and a second message (230, 232) whose at least one property is defined by means of the same at least one operating parameter as in the case of the first message (230, 232) has a second value of this at least one operating parameter, wherein an update process has provision for the older, first message (230, 232) to need to be replaced by the newer, second message (230, 232), with the value of the at least one operating parameter being changed within the message memory (96, 236) .

7. Arrangement according to Claim 6, in which the message memory (96, 236) has a number of memory locations (104, 106, 108, 110, 112, 114, 238, 240, 242, 244), wherein a respective memory location (104, 106, 108, 110, 112, 114, 238, 240, 242, 244) is reserved for a message (230, 232) that fulfils the at least one property.

8. Arrangement according to Claim 6 or 7 that has a communication controller (246) having a transmission register (248), wherein the communication controller (246) is configured to send a message (230, 232) after performance of a write operation by the transmission register (248).

9. Arrangement according to one of Claims 6 to 8 that is arranged in a motor vehicle and configured to interchange messages (230, 232) from a network arranged in the motor vehicle.

## Revendications

1. Procédé, destiné au traitement d'informations (230, 232) dans un véhicule automobile, doté d'au moins un contrôleur Ethernet (234) qui comporte une mémoire d'informations (96, 236), lors duquel une information réceptionnée (230, 232) est vérifiée par l'au moins un contrôleur Ethernet (234) au niveau de la présence d'au moins une propriété et lors duquel l'information réceptionnée (230, 232) est mémorisée dans la mémoire d'informations (96, 236) si ladite au moins une propriété est applicable pour l'information (230, 232), **caractérisé en ce que** l'information réceptionnée (230, 232) comprend une valeur d'au moins un paramètre de service du véhicule automobile et la propriété est définie par l'au moins un paramètre de service du véhicule automobile et **en ce que** l'information (230, 232) est mémorisée en fonction de la propriété applicable dans une place de mémoire de la mémoire d'informations (96, 236) réservée pour ladite information, une première information (230, 232), dont l'au moins une propriété est définie par l'intermédiaire d'au moins un paramètre de service comportant une première valeur dudit au moins un paramètre de service et une deuxième information (230, 232), dont l'au moins une propriété est définie par l'intermédiaire de l'au moins un même paramètre de service que dans le cas de la première information (230, 232) comportant une deuxième valeur dudit au moins un paramètre de service, lors d'un processus de mise à jour, étant prévu que la plus ancienne, première information (230, 232) soit remplacée par la plus nouvelle, deuxième information (230, 232), une modification de la valeur de l'au moins un paramètre de service étant effectuée à l'intérieur de la mémoire d'informations (96, 236).

2. Procédé selon la revendication 1, lors duquel un contenu de la mémoire d'informations (96, 236) de l'au moins un contrôleur Ethernet (234) est mis à jour lorsqu'une information (230, 232) est modifiée.

3. Procédé selon l'une quelconque des revendications précédentes, lors duquel une première information (230, 232), qui comporte l'au moins une propriété est mémorisée dans une place de mémoire (104, 106, 108, 110, 112, 114, 238, 240, 242, 244) de la mémoire d'informations (96, 236) et lors duquel lors de la réception d'une deuxième information (230, 232), qui comporte l'au moins une même propriété que la première information (230, 232) la première information (230, 232) est écrasée par la deuxième information (230, 232).

4. Procédé selon l'une quelconque des revendications précédentes, lors duquel des informations (230, 232) sont envoyées par au moins un contrôleur de communication (246).

5. Procédé selon l'une quelconque des revendications précédentes, lors duquel les informations (230, 232) sont envoyées à l'intérieur d'un réseau, via un protocole Internet.

6. Agencement, destiné à traiter des informations dans un véhicule automobile, qui comporte un contrôleur Ethernet (234) doté d'une mémoire d'informations (96, 236), l'au moins un contrôleur Ethernet (234) étant aménagé pour vérifier une information réceptionnée (230, 232) au niveau de la présence d'au moins une propriété et pour mémoriser l'information réceptionnée (230, 232) dans la mémoire d'informations (96, 236) si ladite au moins une propriété est applicable pour l'information (230, 232), **caractérisé en ce que** l'information réceptionnée (230, 232) comprend une valeur d'au moins un paramètre de service du véhicule automobile et la propriété est définie par l'au moins un paramètre de service du véhicule automobile et **en ce que** le contrôleur Ethernet (234) est aménagé pour mémoriser l'information (230, 232) en fonction de la propriété applicable dans une place de mémoire de la mémoire d'informations (96, 236) réservée pour ladite information (230, 232), une première information (230, 232), dont l'au moins une propriété est définie par l'intermédiaire d'au moins un paramètre de service comportant une première valeur dudit au moins un paramètre de service et une deuxième information (230, 232), dont l'au moins une propriété est définie par l'intermédiaire de l'au moins un même paramètre de service que dans le cas de la première information (230, 232) comportant une deuxième valeur dudit au moins un paramètre de service, lors d'un processus de mise à jour, étant prévu que la plus ancienne, première information (230, 232) doit être remplacée par la plus nouvelle, deuxième information (230, 232), une modification de la valeur de l'au moins un paramètre de service étant effectuée à l'intérieur de la mémoire d'informations (96, 236).

7. Agencement selon la revendication 6, sur lequel la mémoire d'informations (96, 236) comporte un nombre de places de mémoire (104, 106, 108, 110, 112, 114, 238, 240, 242, 244), chaque fois une place de mémoire (104, 106, 108, 110, 112, 114, 238, 240, 242, 244) étant réservée pour une information (230, 232), qui satisfait à l'au moins une propriété.

8. Agencement selon la revendication 6 ou 7, qui comporte un contrôleur de communication (246) pourvu d'un registre d'émission (248), le contrôleur de communication (246) étant conçu pour envoyer une information (230, 232) après l'exécution d'une opération d'écriture par le registre d'émission (248).

9. Agencement selon l'une quelconque des revendications 6 à 8, qui est placé dans un véhicule automobile et qui est conçu pour échanger des informations (230, 232) d'un réseau qui est placé dans le véhicule automobile.
